# EUROPEAN PATENT SPECIFICATION

(11) **EP 2 903 457 B1**
(45) Date of publication and mention of the grant of the patent: **06.12.2017**
(21) Application number: 13780088.4
(22) Date of filing: 01.10.2013
(51) Int. Cl.: A23L 27/30

(54) **MOGROSIDE FORMULATION AND A PRODUCTION PROCESS THEREOF**
MOGROSIDFORMULIERUNG UND HERSTELLUNGSVERFAHREN DAFÜR
FORMULATION DE MOGROSIDE ET PROCÉDÉ DE PRODUCTION DE CELLE-CI

(30) Priority: 02.10.2012 TR 201211212
(43) Date of publication of application: 12.08.2015
(73) Proprietor: MONTERO GIDA SANAYI VE TICARET A.S., Istinye, Istanbul 34460 (TR)
(72) Inventor: TOKSÖZ, Zafer, 34460 Istanbul (TR)
(74) Representative: Sevinç, Erkan
(86) International application number: PCT/EP2013/070414
(87) International publication number: WO 2014/053468

(56) References cited:
- EP-A1- 0 890 359
- WO-A1-2008/036233
- WO-A1-2010/067151
- US-A1- 2010 112 175
- US-A1- 2012 064 218

## Description

### Field of Invention

The present invention relates to newly-developed mogroside formulations and to a production process thereof. The present invention more particularly relates to a mogroside formulation, having improved content uniformity, solubility and dissolution rates and not enhancing the glycemic index, as well as to a production process thereof.

### Prior Art

Mogroside is a sweetener obtained from the plant siraitia grasvenorii (Lo Han Kuo). Mogroside has a sweetening effect which is around 300 times more potent than saccharose.

The patent application US2010310751 discloses a sweetening composition composed of Mogroside V and Katemfe fruit and mono-ammonium glycyrrhizin.

The patent application WO2012103074 discloses a composition composed of Mogroside V and Rebaudioside. Rebaudioside is selected from a group composed of Rebaudioside A, B and D. The patent application WO2008/036233 describes high-intensity sweetener compositions containing a disintegrant. The preferred sweetener used is sucralose.

Content uniformity of sweetener formulations is important in achieving the aimed taste level. It is possible to achieve the content uniformity using suitable excipients and suitable processes. The lack of content uniformity results in different sweetening levels among portions of a sweetener composition used. This, in turn, is undesirable in terms of users.

In order to meet all these needs, sweetener formulations should fulfill particularly several requirements paying attention to the following features:

### Content uniformity of the sweetener:

Each sweetener tablet, for instance, should contain the same amount of sweetener. The selection and amount of the excipients in each tablet directly influences some parameters like sweetening potent, disintegration, stability, solubility, and dissolution rate.

### Flowability:

The production process is facilitated with the flow characteristics of a powder form prior to tablet compression and with the sweetener composition not adhering to the machinery and equipment.

### Disintegration/Solubility/Dissolution Rate

Additionally, many sweetener formulations should provide an adequately good and rapid disintegration and solubility, and should have a superior dissolution rate in the beverages in which they are used. However, desirable results cannot be always achieved in sweetener compositions which are expected to show these features particularly even under low temperatures, and undesirable circumstances take place in terms of users. An incomplete dissolution and residual particles lead to an undesirable appearance in the beverage in which the sweeteners are used. Avoiding all these problems depends on the suitability of excipients to be selected.

### Stability

In addition, various stability problems are encountered in sweeteners under the influence of ambient and physical conditions. Such sweeteners are considerably influenced from temperature, air and humidity conditions. Exposure to air and humidity results in structural degradation and in the development of chemical behavior change in the sweeteners. The stability of developed products does not reach a desired level and the shelf life thereof becomes shortened. In addition, these active agents are reactive against the excipients employed in developing the formulations containing the same. This, in turn, causes impurities to occur in the formulations and leads to the inclusion of undesired components into the formulations. It is of critical importance in terms of the formulation to use those excipients and methods which do not lead to said problems.

In result, the art of sweetener products requires a novelty to provide the advantages of not increasing the glycemic index, providing content uniformity, of simple production, and a good dissolution rate and stability.

### Object and Brief Description of Invention

The present invention relates to sweetener formulations, eliminating all aforesaid problems and bringing additional advantages to the relevant prior art.

Accordingly, the main object of the present invention is to obtain a sweetener formulation which does not increase the glycemic index.

Another object of the present invention is to obtain a sweetener formulation which has content uniformity.

Another object of the present invention is to eliminate the problems related to flowability decrease and to adhering of the respective materials to production equipment by virtue of the formulation obtained.

Another object of the present invention is to obtain a sweetener formulation with improved disintegration, solubility, and dissolution rates particularly when used in beverages.

Another object of the present invention is to obtain a stable sweetener formulation.

In order to carry out all objects referred to above and to emerge from the following detailed description, a sweetener formulation is developed.

According to the present invention, the novelty is realized using mogroside as a high-intensity sweetener and at least one disintegrant, wherein the proportion by weight of the amount of mogroside to the amount of disintegrant is in the range of 1 to 30.

According to a preferred embodiment of the present invention, the proportion by weight of the amount of disintegrant to the total amount of the formulation is in the range of 1 to 10.

According to another preferred embodiment of the present invention, the formulation further comprises leucine.

According to another preferred embodiment of the present invention, the proportion by weight of the amount of mogroside to the amount of leucine is in the range of 0,5 to 20.

According to another preferred embodiment of the present invention, the proportion by weight of the disintegrant to leucine is in the range of 1:20 to 10:1.

According to another preferred embodiment of the present invention, the disintegrant is preferably calcium carboxymethyl cellulose and/or sodium carboxymethyl cellulose.

According to another preferred embodiment of the present invention, the disintegrant is preferably polyvinylpyrrolidone.

According to another preferred embodiment of the present invention, the disintegrant is preferably croscarmellose sodium.

According to another preferred embodiment of the present invention, the disintegrant is preferably low-substituted hydroxypropyl cellulose.

According to another preferred embodiment of the present invention, the disintegrant is preferably sodium starch glycolate.

According to another preferred embodiment of the present invention, the disintegrant is preferably alginate or salts of alginate.

According to a preferred embodiment of the present invention, the formulation further comprises lactose as a diluent. The lactose is lactose monohydrate.

According to a further preferred embodiment of the present invention, the tablet hardness in 5 - 20 N.

According to a further preferred embodiment of the present invention, the formulation further comprises inulin.

According to a further preferred embodiment of the present invention, the formulation further comprises erythritol. According to a further preferred embodiment of the present invention, the formulation is in the form of a tablet, granule or powder.

According to the present invention, said sweetener formulation is produced by a method, comprising the steps of
a. adding mogroside, I-leucine, lactose, and a suitable disintegrant and mixing these ingredients together,
b. adding magnesium stearate to the first mixture and mixing the same,
c. compressing the resulting mixture into tablets.

### Detailed Description of Invention

### Example 1:

| **Unit Formula** | **%** |
|---|---|
| Mogroside | 10 - 50 |
| Lactose monohydrate | 10 - 50 |
| Calcium carboxymethyl cellulose | 1 - 10 |
| Leucine | 2 - 15 |
| Magnesium stearate | 0,1 - 5 |

In the sweetener formulation of this example mogroside, leucine, lactose, and calcium carboxymethyl cellulose are mixed together. Then magnesium stearate is added into and mixed together with the first mixture. Finally, the mixture is packaged or compressed into tablets. Preferably the direct compression method is used in the production. The formulation can alternatively be produced by means of wet granulation.

### Example 2:

| **Unit Formula** | **%** |
|---|---|
| Mogroside | 10 - 50 |
| Erythritol | 5 - 50 |
| Inulin | 2 - 50 |
| Lactose monohydrate | 10 - 50 |
| Calcium carboxymethyl cellulose | 1 - 10 |
| Leucine | 2 - 15 |
| Magnesium stearate | 0,1 - 5 |

In the sweetener formulation of this example mogroside, erythritol, inulin, leucine, lactose, and calcium carboxymethyl cellulose are mixed together. Then magnesium stearate is added into and mixed together with the first mixture. Finally, the mixture is packaged or compressed into tablets. Preferably the direct compression method is used in the production. The formulation can alternatively be produced by means of wet granulation.

### Example 3:

| **Unit Formula** | **%** |
|---|---|
| Mogroside | 10 - 50 |
| Lactose monohydrate | 10 - 50 |
| Polyvinylpyrrolidone | 1 - 10 |
| Leucine | 2 - 15 |
| Magnesium stearate | 0,1 - 5 |

In the sweetener formulation of this example mogroside, leucine, lactose, and polyvinylpyrrolidone are mixed together. Then magnesium stearate is added into and mixed together with the first mixture. Finally, the mixture is packaged or compressed into tablets. Preferably the direct compression method is used in the production. The formulation can alternatively be produced by means of wet granulation.

### Example 4:

| **Unit Formula** | **%** |
|---|---|
| Mogroside | 10 - 50 |
| Erythritol | 5 - 50 |
| Inulin | 2 - 50 |
| Lactose monohydrate | 10 - 50 |
| Polyvinylpyrrolidone | 1 - 10 |
| Leucine | 2 - 15 |
| Magnesium stearate | 0,1 - 5 |

In the sweetener formulation of this example mogroside, erythritol, inulin, leucine, lactose, and polyvinylpyrrolidone are mixed together. Then magnesium stearate is added into and mixed together with the first mixture. Finally, the mixture is packaged or compressed into tablets. Preferably the direct compression method is used in the production. The formulation can alternatively be produced by means of wet granulation.

### Example 5:

| **Unit Formula** | **%** |
|---|---|
| Mogroside | 10 - 50 |
| Lactose monohydrate | 10 - 50 |
| Sodium starch glycolate | 1 - 10 |
| Leucine | 2 - 15 |
| Magnesium stearate | 0,1 - 5 |

In the sweetener formulation of this example mogroside, leucine, lactose, and sodium starch glycolate are mixed together. Then magnesium stearate is added into and mixed together with the first mixture. Finally, the mixture is packaged or compressed into tablets. Preferably the direct compression method is used in the production. The formulation can alternatively be produced by means of wet granulation.

### Example 6:

| **Unit Formula** | **%** |
|---|---|
| Mogroside | 10 - 50 |
| Erythritol | 5 - 50 |
| Inulin | 2 - 50 |
| Lactose monohydrate | 10 - 50 |
| Sodium starch glycolate | 1 - 10 |
| Leucine | 2 - 15 |
| Magnesium stearate | 0,1 - 5 |

In the sweetener formulation of this example mogroside, erythritol, inulin, leucine, lactose, and sodium starch glycolate are mixed together. Then magnesium stearate is added into and mixed together with the first mixture. Finally, the mixture is packaged or compressed into tablets. Preferably the direct compression method is used in the production. The formulation can alternatively be produced by means of wet granulation.

### Example 7:

| **Unit Formula** | **%** |
|---|---|
| Mogroside | 10 - 50 |
| Lactose monohydrate | 10 - 50 |
| Croscarmellose sodium | 1 - 10 |
| Leucine | 2 - 15 |
| Magnesium stearate | 0,1 - 5 |

In the sweetener formulation of this example mogroside, leucine, lactose, and croscarmellose sodium are mixed together. Then magnesium stearate is added into and mixed together with the first mixture. Finally, the mixture is packaged or compressed into tablets. Preferably the direct compression method is used in the production. The formulation can alternatively be produced by means of wet granulation.

### Example 8:

| **Unit Formula** | **%** |
|---|---|
| Mogroside | 10 - 50 |
| Erythritol | 5 - 50 |
| Inulin | 2 - 50 |
| Lactose monohydrate | 10 - 50 |
| Croscarmellose sodium | 1 - 10 |
| Leucine | 2 - 15 |
| Magnesium stearate | 0,1 - 5 |

In the sweetener formulation of this example mogroside, erythritol, inulin, leucine, lactose, and croscarmellose sodium are mixed together. Then magnesium stearate is added into and mixed together with the first mixture. Finally, the mixture is packaged or compressed into tablets. Preferably the direct compression method is used in the production. The formulation can alternatively be produced by means of wet granulation.

In said formulation the sweeteners mogroside, inulin and/or erythritol do not have any glycemic index potential. Thus, a product is obtained which can be used very safely by those who are in diets or by the diabetics. The formulation obtained has a surprisingly high content uniformity, disintegration, solubility, and dissolution rate. The proportion of mogroside to the disintegrant is between 1 and 30. The proportion by weight of the disintegrant to the total amount of the formulation is between 1 and 10. The proportion of the amount of mogroside to the amount of leucine is between 0,5 and 20. The proportion by weight of said disintegrant to leucine is in the range of 1:20 and 10:1. By virtue of these proportions, a formulation is obtained which has a high content uniformity, disintegration, solubility, and dissolution rate. In addition to said diluents and disintegrants, the preferred tablet hardness (5 - 20 N) is another factor in obtaining said advantages. The excipients selected allow to obtain a quite stable product. Using lactose has a direct influence in obtaining said advantages. Additionally, no turbidity occurs when the formulation is dissolved in a liquid.

Mogroside can be selected from Mogroside I, II, III, IV, and Mogroside V. The Mogroside used in the formulation is preferably Mogroside I or Mogroside II or Mogroside III or Mogroside IV or Mogroside V, or a properly proportioned mixture thereof. It is also possible to select the iso forms thereof.

Sodium stearyl fumarate can be preferred as a lubricant in the formulation. Additionally, colloidal silicon dioxide can also be preferred as a lubricant in the formulation.

It is also possible to produce liquid formulations using the sweetener mogroside and suitable excipients.

By virtue of the excipients used in the present invention, problems related to flowability decrease and to adhering of the respective materials to production apparatuses and equipment are overcome.

Additionally, the product's disintegration, solubility, and dissolution rate are brought to a very satisfactory level by virtue of using the disintegrants indicated in the Examples.

The compositions according to the present invention comprise forms such as powders, tablets, granules, solutions etc..

Preferably, the compositions according to the present invention are in the form of a tablet or powder. The compounding process for the tablets may be in the form of direct compression, wet granulation or dry granulation.

The compositions according to the present invention may further comprise one or more excipient(s). Suitable excipients include, but are not limited to fillers, disintegrants, surface active agents, lubricants, glidants, etc. and the mixtures thereof.

Suitable fillers include, but are not limited to at least one or a mixture of mannitol, sorbitol, galactitol, fucitol, iditol, inositol, volemitol, isomalt, arabitol, ribitol, ksilitol, erythritol, lactitol, maltitol, glucose, threitol.

Suitable disintegrants include, but are not limited to croscarmellose sodium, sodium starch glycolate, crospovidone, starch (e.g. corn starch, potato starch), etc., and the mixtures thereof.

Suitable lubricants include, but are not limited to colloidal silicon dioxide, talc, aluminum silicate, etc. and the mixtures thereof.

Suitable glidants include, but are not limited to sodium stearyl fumarate, talk, polyethylene glycol, stearic acid, etc. and the mixtures thereof.

In conclusion, by virtue of said embodiment, a sweetener composition is obtained, which does not raise the glycemic index and is advantageous in terms of production simplicity.

## Claims

1. A sweetener formulation, comprising mogroside as a high-intensity sweetener and at least one disintegrant; wherein the proportion by weight of the amount of mogroside to the amount of disintegrant is in the range of 1 to 30.

2. A formulation according to any of the preceding claims, wherein the proportion by weight of the disintegrant to the total amount of the formulation is in the range of 1 to 10.

3. A formulation according to any of the preceding claims, further comprising leucine.

4. A formulation according to any of the preceding claims, wherein the proportion by weight of mogroside to the amount of leucine is in the range of 0,5 to 20.

5. A formulation according to any of the preceding claims, wherein the proportion by weight of the disintegrant to leucine is between 1:20 and 10:1.

6. A formulation according to any of the preceding claims, wherein the disintegrant is preferably calcium carboxymethyl cellulose and/or sodium carboxymethyl cellulose.

7. A formulation according to any of the preceding claims, wherein the disintegrant is preferably polyvinylpyrrolidone.

8. A formulation according to any of the preceding claims, wherein the disintegrant is preferably croscarmellose sodium.

9. A formulation according to any of the preceding claims, wherein the disintegrant is preferably low-substituted hydroxypropyl cellulose.

10. A formulation according to any of the preceding claims, wherein the disintegrant is preferably sodium starch glycolate.

11. A formulation according to any of the preceding claims, wherein the disintegrant is preferably alginate or salts of alginate.

12. A formulation according to any of the preceding claims, further comprising lactose as a diluent.

13. A formulation according to any of the preceding claims, **characterized in that** the proportion of the amount of mogroside to the total weight of the composition is around 1 to 30%.

14. A formulation according to any of the preceding claims, further comprising inulin.

15. A formulation according to any of the preceding claims, further comprising erythritol.

16. A formulation according to any of the preceding claims, wherein said formulation is in the form of a tablet, granule or powder.

17. A formulation according to any of the preceding claims, wherein the hardness of the tablet is 5 to 20 N.

18. A method for preparing a sweetener formulation according to any of the preceding claims, comprising the steps of
a. adding mogroside, I-leucine, lactose, and a suitable disintegrant and mixing these ingredients together,
b. adding magnesium stearate to the first mixture and mixing the same, and
c. compressing the resulting mixture into tablets.

## Patentansprüche

1. Süßungsmittel-Formulierung, umfassend Mogrosid als Süßungsmittel hoher Intensität und mindestens ein Sprengmittel; wobei das Gewichtsverhältnis der Menge an Mogrosid zur Menge an Sprengmittel im Bereich von 1 bis 30 ist.

2. Formulierung nach einem der vorangehenden Ansprüche, wobei das Gewichtsverhältnis des Sprengmittels zur Gesamtmenge der Formulierung im Bereich von 1 bis 10 ist.

3. Formulierung nach einem der vorangehenden Ansprüche, wobei sie zusätzlich Leucin umfasst.

4. Formulierung nach einem der vorangehenden Ansprüche, wobei das Gewichtsverhältnis von Mogrosid zur Menge an Leucin im Bereich von 0,5 bis 20 ist.

5. Formulierung nach einem der vorangehenden Ansprüche, wobei das Gewichtsverhältnis des Sprengmittels zu Leucin zwischen 1:20 und 10:1 ist.

6. Formulierung nach einem der vorangehenden Ansprüche, wobei das Sprengmittel vorzugsweise Calcium-Carboxymethylcellulose und/oder NatriumCarboxymethylcellulose ist.

7. Formulierung nach einem der vorangehenden Ansprüche, wobei das Sprengmittel vorzugsweise Polyvinylpyrrolidon ist.

8. Formulierung nach einem der vorangehenden Ansprüche, wobei das Sprengmittel vorzugsweise Croscarmellose-Natrium ist.

9. Formulierung nach einem der vorangehenden Ansprüche, wobei das Sprengmittel vorzugsweise niedrigsubstituierte Hydroxypropylcellulose ist.

10. Formulierung nach einem der vorangehenden Ansprüche, wobei das Sprengmittel vorzugsweise Natriumstärkeglykolat ist.

11. Formulierung nach einem der vorangehenden Ansprüche, wobei das Sprengmittel vorzugsweise Alginat oder Alginatsalze ist.

12. Formulierung nach einem der vorangehenden Ansprüche, wobei sie zusätzlich Lactose als ein Verdünnungsmittel umfasst.

13. Formulierung nach einem der vorangehenden Ansprüche, **dadurch gekennzeichnet, dass** der Anteil der Menge an Mogrosid zum Gesamtgewicht der Zusammensetzung etwa 1 bis 30 % ist.

14. Formulierung nach einem der vorangehenden Ansprüche, wobei sie zusätzlich Inulin umfasst.

15. Formulierung nach einem der vorangehenden Ansprüche, wobei sie zusätzlich Erythritol umfasst.

16. Formulierung nach einem der vorangehenden Ansprüche, wobei die Formulierung in Form einer Tablette, Granulat oder Pulver ist.

17. Formulierung nach einem der vorangehenden Ansprüche, wobei die Härte der Tablette 5 bis 20 N ist.

18. herfahren zum Herstellen einer Süßungsmittel-Formulierung nach einem der vorangehenden Ansprüche, umfassend die Schritte
a. Zugeben von Mogrosid, L-Leucin, Lactose und einem geeigneten Sprengmittel, und Zusammenmischen dieser Bestandteile,
b. Zugeben von Magnesiumstearat zur ersten Mischung und Mischen derselben, und
c. Komprimieren der resultierenden Mischung zu Tabletten.

## Revendications

1. Formulation d'édulcorant comprenant du mogroside en tant qu'édulcorant à haute intensité et
au moins un délitant ; dans laquelle la proportion en poids de la quantité de mogroside par rapport à la quantité de délitant se situe dans une fourchette allant de 1 à 30.

2. Formulation selon l'une quelconque des revendications précédentes, dans laquelle la proportion en poids du délitant par rapport à la quantité totale de la formulation se situe dans une fourchette allant de 1 à 10.

3. Formulation selon l'une quelconque des revendications précédentes, comprenant en outre de la leucine.

4. Formulation selon l'une quelconque des revendications précédentes, dans laquelle la proportion en poids de la quantité de mogroside par rapport à la quantité de leucine se situe dans une fourchette allant de 0.5 à 20.

5. Formulation selon l'une des revendications précédentes, dans laquelle la proportion en poids du délitant par rapport à la leucine est comprise entre 1:20 et 10:1

6. Formulation selon l'une des revendications précédentes, dans laquelle le délitant est de préférence de la carboxyméthylcellulose de calcium et/ou de la carboxyméthylcellulose sodique.

7. Formulation selon l'une des revendications précédentes, dans laquelle le délitant est de préférence du polyvinylpyrrolidone.

8. Formulation selon l'une des revendications précédentes, dans laquelle le délitant est de préférence de la croscarmellose sodique.

9. Formulation selon l'une des revendications précédentes, dans laquelle le délitant est de préférence de l'hydroxypropylcellulose de basse substitution.

10. Formulation selon l'une des revendications précédentes, dans laquelle le délitant est de préférence du glycolate d'amidon sodique.

11. Formulation selon l'une des revendications précédentes, dans laquelle le délitant est de préférence de l'alginate ou des sels d'alginate.

12. Formulation selon l'une des revendications précédentes, comprenant en outre du lactose comme diluant.

13. Formulation selon l'une des revendications précédentes, **caractérisée par le fait que** la proportion de la quantité de mogroside par rapport au poids total de la composition se situe aux alentours de 1 à 30 %.

14. Formulation selon l'une des revendications précédentes, comprenant en outre de l'inuline.

15. Formulation selon l'une des revendications précédentes, comprenant en outre de l'érythritol.

16. Formulation selon l'une des revendications précédentes, dans laquelle ladite formulation se trouve sous la forme de comprimés, de granulés ou de poudre.

17. Formulation selon l'une des revendications précédentes, dans laquelle la dureté du comprimé est de 5 à 20 N.

18. Procédé de préparation d'une formulation d'édulcorant selon l'une quelconque des revendications précédentes, comprenant les étapes suivantes :
a. l'ajout de mogroside, de I-leucine, de lactose et d'un délitant approprié et le mélange de ces ingrédients tous ensemble.
b. l'ajout de stéarate de magnésium au premier mélange et le mélange de l'ensemble, et
c. la compression du mélange obtenu en comprimés.
